# EUROPÄISCHE PATENTSCHRIFT

(11) **EP 2 047 738 B1**
(45) Veröffentlichungstag und Bekanntmachung des Hinweises auf die Patenterteilung: **28.03.2018**
(21) Anmeldenummer: 08016509.5
(22) Anmeldetag: 19.09.2008
(51) Int. Cl.: A01D 43/08, A01D 45/02, A01D 69/02

(54) **Maschine zum Ernten von Fruchtständen**
Machine for harvesting seed heads
Machine de récolte de pousses de plantes

(30) Priorität: 12.10.2007 DE 102007049250
(43) Veröffentlichungstag der Anmeldung: 15.04.2009
(73) Patentinhaber: CLAAS Selbstfahrende Erntemaschinen GmbH, 33428 Harsewinkel (DE)
(72) Erfinder: Prenzler, Jürgen, 88379 Unterwaldhausen (DE)

(56) Entgegenhaltungen:
- EP-A1- 1 174 019
- EP-A2- 1 466 518
- EP-A2- 1 470 748
- DE-A1- 10 026 495

## Beschreibung

Die Erfindung betrifft eine Vorrichtung zum Antreiben von Pflückwalzen zum Ernten von Fruchtständen in der Landwirtschaft gemäß dem Oberbegriff des unabhängigen Anspruchs 1.

### Stand der Technik

Bekannt sind Maschinen zum Ernten von Fruchtständen, beispielsweise Maispflücker, als Vorsatzgeräte mit umlaufend angetriebenen und in einer Reihe quer zur Fahrtrichtung nebeneinander liegenden Pflückwalzen, die von einem Antriebsstrang, der mit einer Zapfwelle des Trägerfahrzeugs verbunden ist, angetrieben werden. Dabei bilden je zwei nebeneinander liegende Pflückwalzen, die gegenläufig zueinander umlaufen, ein Pflückwalzenpaar. Die zueinander beabstandeten Pflückwalzen eines Pflückwalzenpaars wiederum bilden einen Pflückspalt, durch den die Pflanzenstängel etwa vertikal von oben nach unten hindurchgezogen werden, so dass die Fruchtstände, beispielsweise Maiskolben, von den Pflückkanten des Pflückspalts abgestreift werden und demzufolge den Pflückspalt nicht passieren können. Entsprechend ihrer Funktion als angetriebene Förderketten oder Mitnehmerflügel ausgebildete Förderelemente sorgen nach dem Abstreifen der Fruchtstände für ihren Weitertransport in Richtung des Trägerfahrzeugs, wie Mähdrescher oder Feldhäcksler. Die Vielzahl der Pflückwalzenpaare macht eine ebenso große Vielzahl an sogenannten Pflückgetrieben erforderlich, die antriebsseitig mit dem Antriebsstrang des Trägerfahrzeugs verbunden sind. Pflückgetriebe sind nicht nur kostenintensiv, sondern stellen zugleich auch einen hohen Gewichtsanteil des Vorsatzgerätes dar, welches dazu führt, dass die Achslast des Trägerfahrzeugs hoch ausfällt, welches öffentliche Straßen und Wege entsprechend hoch belastet. Überschreitet die Gewichtsbelastung bei größeren Arbeitsbreiten die zulässige Achsbelastung des Trägerfahrzeugs, so wird das Vorsatzgerät für die Straßentransportfahrt vom Trägerfahrzeug abgekoppelt und auf einem separaten Transportwagen transportiert. Diesem Umstand abzuhelfen hat sich die Erfindung zum Ziel gesetzt.
Eine derartiges Vorsatzgerät ist aus der DE 100 26 495 A1 bekannt.

EP-A-1466518 offenbart eine Vorrichtung gemäss dem Oberbegriff des Anspruchs 1.

### Aufgabenstellung

Die Erfindung hat sich zur Aufgabe gestellt, den Antrieb der Pflückwalzen von Maschinen oder Vorsatzgeräten zum Ernten von Fruchtständen zu vereinfachen, um damit die Wirtschaftlichkeit derartiger Maschinen zu verbessern.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung sieht vor, ein eine Vorrichtung zum Antreiben von Pflückwalzen von Vorsatzgerätes zum Ernten von Fruchtständen von stängeligem Erntegut, wie beispielsweise Maispflanzen oder Sonnenblumen vorzuschlagen. Dabei sollen die Pflückwalzen von einem elektrischen Antriebssystem, welches energetisch mit der Abtriebswelle des Verbrennungsmotors gekoppelt ist, angetrieben werden.

Erfindungsgemäß wird dieses dadurch erreicht, dass die antriebsseitige Verbindung zum Verbrennungsmotor des Trägerfahrzeugs durch einen elektrischen Stromerzeuger und über elektrische Leitungsverbindungen zwischen dem Stromerzeuger als Generator und Antriebsmotor als Teil einer Pflückeinheit hergestellt wird.

Hierzu ist der Antriebsmotor Teil einer Pflückwalze und dabei ist dieser als Drehstrom-Asynchronmotor und als Kurzschluss-Käfigläufer und als Außenläufer ausgebildet. Der Stromerzeuger, der sowohl Teil des Trägerfahrzeugs, als auch Teil des Vorsatzgerätes sein kann, ist als einfacher Drehstromgenerator, beispielsweise mit einer Ausgangsnennspannung von etwa 400 Volt mit einer variablen Frequenz von etwa 50 bis 70 Hz ausgebildet. Dieses wird auf besonders einfache Art und Weise erreicht durch einen hydrostatischen Antrieb mit variabler Abtriebsdrehzahl. Der hydrostatische Antrieb kann sowohl im offenen Kreislauf oder im energetisch günstigeren geschlossenen Kreislauf erfolgen.

Die Erfindung sieht demzufolge vor, die Pflückwalzenpaare eines Vorsatzgerätes mit einem elektrischen Antrieb zu versehen. Jede Pflückwalze eines Pflückwalzenpaares weist einen separaten elektrischen Antriebsmotor in Form eines Außenläufers auf, der im Inneren der Pflückwalze untergebracht ist. Dadurch entfällt der komplette sonst erforderliche Antriebsstrang und alle dazugehörigen Verteiler und Winkelgetriebe.

Antriebsmotoren, als Außenläufer ausgebildet, zeichnen sich dadurch aus, dass das Gehäuse des Motors umlaufend angetrieben ist und die Wicklung des Motors auf einer feststehenden Achse untergebracht ist. Dabei kann der Motor in besonders vorteilhafter Weise als Drehstrommotor ausgebildet sein, dessen Drehzahl abhängig ist von der Frequenz des Drehstroms und der Poolpaarzahl des Motors. Da die Drehzahl der Pflückwalzen je nach Durchmesser etwa im Bereich von 750 bis 1000 U/Minute liegt, ist eine Polpaarzahl von 4 bei einer Frequenz im Bereich von 50 bis etwa 70 Hz besonders vorteilhaft. Zur Erzeugung der elektrischen Energie kann vorzugsweise ein Drehstromgenerator mit einer Ausgangsspannung von 400 Volt und einer Nennfrequenz von etwa 50Hz zur Anwendung kommen. Kann dieser mit einer variablen Antriebsdrehzahl betrieben werden, so kann gleichzeitig eine variable Frequenz des Ausgangsstroms des Drehstromgenerators erzeugt werden, welche zur Drehzahlsteuerung der Pflückwalzen genutzt werden kann. In besonders vorteilhafter Weise kann der Drehstromgenerator durch einen Hydraulikmotor angetrieben werden, der mit der Bordhydraulik des Trägerfahrzeugs in Wirkverbindung steht. Ebenso ist es auch möglich, den hydraulischen Antrieb des Drehstromgenerators im hydraulisch geschlossenen Kreislauf zu betreiben, wodurch der Wirkungsgrad des hydraulischen Antriebs besonders günstig ausfällt.

Hierbei ist der Drehstromgenerator Teil des Vorsatzgerätes. Durch die erfinderische Ausgestaltung des Antriebs der Pflückwalzen kann nicht nur das Gewicht des Vorsatzgerätes erheblich gesenkt werden, sondern zugleich auch die Drehzahl der Pflückwalzen auf besonders einfache Art variabel gestaltet werden. Ebenso können die kostenintensiven Verbindungs- und Gelenkwellen und deren Lagerstellen entfallen, da diese Antriebselemente durch einfache und kostengünstige Kabelstränge zur Übertragung der elektrischen Energie ersetzt werden.

Diese einfache Ausgestaltung des Antriebsmotors einer Pflückwalze als Drehstromkäfigläufer ohne Getriebe bzw. Getriebekosten, ohne Ölfüllung ist kostengünstig robust und wartungsarm, zeigt wenig Verschleiß, geringe Geräuschentwicklung und eine hohe Systemsteifigkeit, welches ebenso für das Energieerzeugungs- und - Übertragungssystem der Stromversorgung als Ganzes gilt.

### Ausführungsbeispiel

Nähere Einzelheiten der Erfindung sind den nachfolgenden Figurendarstellungen und deren Beschreibungen zu entnehmen.

Es zeigen:
- Fig. 1: zeigt eine Pflückwalzeneinheit im Horizontal- bzw. Längsschnitt
- Fig. 2: zeigt eine Pflückwalze im Längsschnitt
- Fig. 3: zeigt den Schnitt A-A gemäß Fig. 2
- Fig. 4: zeigt ein Vorsatzgerät ausgebildet als Pflückvorsatz in Verbindung mit einem Trägerfahrzeug

Pflückaggregate zum Ernten von Fruchtständen sind dem Fachmann bekannt, so dass sich ein Ausführungsbeispiel der Erfindung auf das Wesentliche, nämlich die Ausgestaltung einer erfinderischen Pflückeinheit beschränken kann.

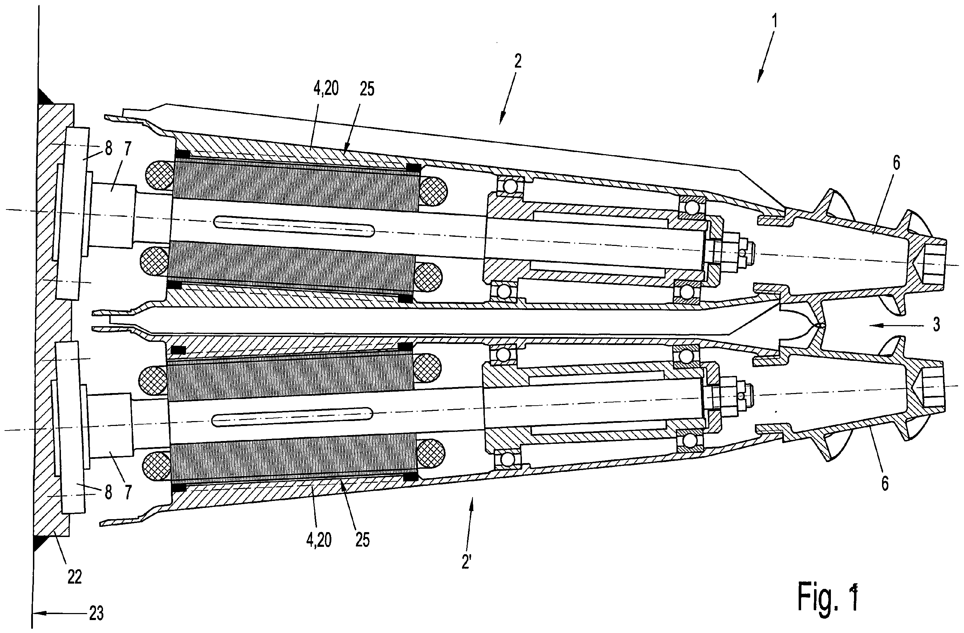

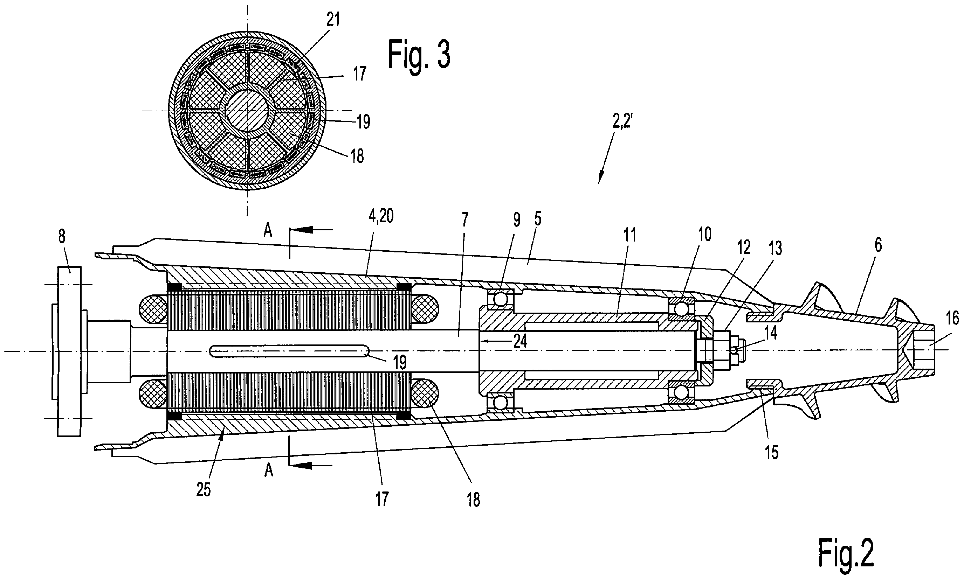

In Fig. 1 ist eine Pflückeinheit 1 im Horizontal- bzw. Längsschnitt am Beispiel von zwei konischen Pflückwalzen 2,2' dargestellt. Fig. 2 zeigt eine einzelne Pflückwalze 2,2' im Längsschnitt und der Schnitt A-A als Fig. 3 zeigt einen Querschnitt durch eine Pflückwalze 2,2', welche zugleich als Drehstrommotor und Außenläufer ausgeführt ist. Dieses bedeutet, dass die Feld- bzw. Statorwicklung 18 als Stator 17 auf der feststehenden Achse im Inneren des Motors untergebracht ist, wobei der Walzenkörper 4 bei Stromfluss außen um die Statorwicklung 18 herum rotiert und somit den Läufer 20 bildet.

Die zueinander beabstandeten Pflückwalzen 2,2' einer Pflückeinheit 1 drehen umlaufend angetrieben gegenläufig zueinander und sie schließen einen nach vorne hin offenen Pflückspalt 3 ein. Eine Pflückwalze 2,2' besteht im Wesentlichen aus dem konischen, als Hohlkörper ausgeführten Walzenkörper 4, der am Umfang mit mehreren Pflückmessern 5 besetzt ist. Im Einzugsbereich und am vorderen Ende der Pflückwalzen 2,2' der Pflückeinheit 1 ist jeder Walzenkörper 4 mit einem Aufnahmegewinde als Einschraubgewinde 15 ausgestattet, welches eine konische Einzugsschnecke 6 aufnimmt. Die Einzugsschnecke 6 ist an ihrem Spitzende verschlossen und dieses weist einen Innensechskant 16 auf, der eine Steckschlüsselverbindung für Innensechskantschlüssel darstellt, um die Einzugsschnecke 6 in das Einschraubgewinde 15 eindrehen zu können.

Drehbar gelagert ist der Walzenkörper 4 in Wälzlagern 9,10, welche auf einer Distanzhülse 11 zueinander beabstandet ihren festen Lagersitz finden. Die Distanzhülse 11 wird von der feststehenden Flanschachse 7 aufgenommen und axial gegen eine Achsschulter 24 der Flanschachse 7 durch eine fest angezogene Sicherungsmutter 13, welche von einem Gewinde der Flanschachse 7 aufgenommen ist und an der Druckscheibe 12 anliegt, gegen eine Drehbewegung auf der Flanschachse abgesichert bzw. auf der Flanschachse 7 somit festgesetzt. Die Sicherungsmutter 13, ausgeführt als Kronenmutter, ist mit einem Splint 14 gegen Verdrehung gesichert. Die Flanschachse 7 ist endseitig mit einem Flansch 8 ausgebildet, der von einer Zentrierung der Flanschplatte 22 aufgenommen wird und mit dieser fest verschraubt ist. Die Flanschplatte 22 ist in dem Ausführungsbeispiel mit einem nicht näher dargestellten Rahmengestell 23 verschweißt.

Die Pflückwalze 2,2' ist als Antriebs- bzw. Drehstrommotor 25 und insbesondere als Drehstrom-Asynchronmotor und Außenläufer ausgebildet. Die Statorwicklung 18 des Drehstrommotors 25 wird vom Stator 17, welcher in bekannter Weise aus einem geschichteten Blechpaket besteht, aufgenommen, und ist drehfest durch die Passfeder 19 mit der Flanschachse 7 verbunden. Der Läufer 20 ist zugleich als Walzenkörper 4 ausgebildet, wobei der für Asynchronmotore, ausgebildet als Kurzschluss-Käfigläufer, typische Leiterstabkäfig 21 von dem Rotor aufgenommen wird. Auch dieser Leiterstabkäfig 21 kann von einem Blechpaket als Teil des Läufers 20 aufgenommen werden. Die aus Gründen der Übersichtlichkeit nicht dargestellten elektrischen Leitungsverbindungen 27 zum Stromerzeuger DG werden aus dem Inneren der Pflückwalze 2,2' nach außen ausgeführt.

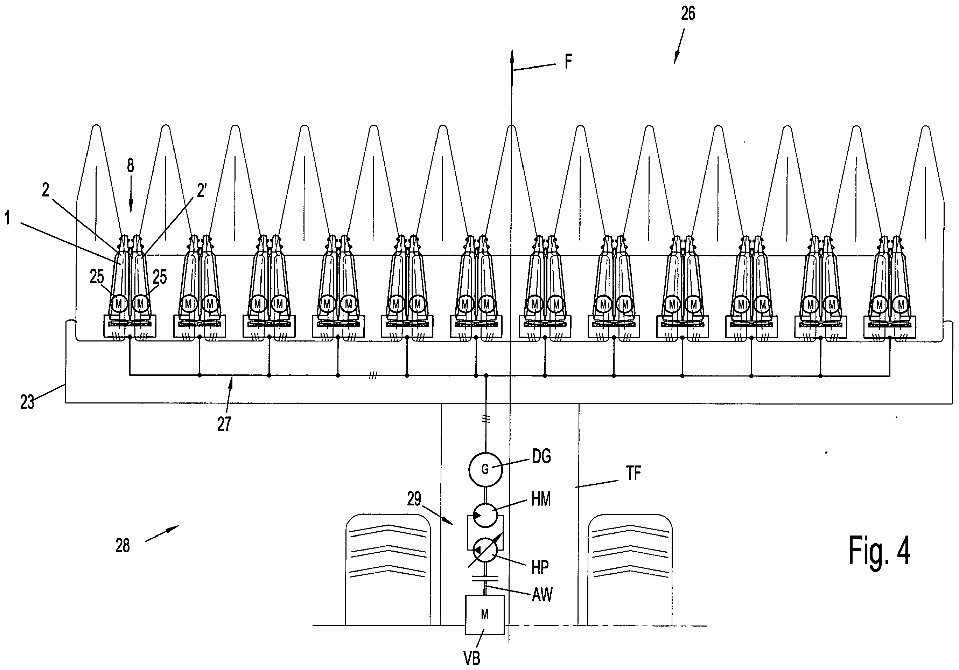

Fig. 4 zeigt ein Vorsatzgerät 26 ausgebildet als Pflückvorsatz in Verbindung mit einem Trägerfahrzeug TF in einer vereinfachten Darstellung in Verbindung mit dem Antriebssystem 28 nach der Erfindung. Die Fahrtrichtung F in der Arbeitsfahrt ist durch den Fahrtrichtungspfeil gekennzeichnet.

Auf dem Trägerfahrzeug TF befindet sich der Verbrennungsmotor VB, der über eine Abtriebswelle AW einen hydrostatischer Antrieb 29, bestehend aus einer Hydraulikpumpe HP, ausgeführt als Verstellpumpe, und einem Hydraulikmotor HM, antreibt. Die Hydraulikpumpe HP treibt einen Hydraulikmotor HM im geschlossenen Kreislauf an und der Hydraulikmotor HM treibt den Drehstromgenerator DG an. Über die 3-phasige elektrische Leitungsverbindung 27 stehen die Drehstrommotore 25 der Pflückeinheiten 1 mit dem Drehstromgenerator DG als Stromerzeuger in elektrischer Wirk- bzw. Antriebsverbindung. Die Hydraulikpumpe HP, ausgeführt als Verstellpumpe, ermöglicht eine stufenlose Steuerung der Fördermenge des Hydrauliköls und damit auch eine stufenlose Ansteuerung der Drehzahl des Hydraulikmotors HM bzw. des Drehstromgenerators DG. Dieses ermöglicht auf besonders einfache Art die Veränderung der Frequenz der Ausgangsspannung des Drehstromgenerators DG und damit auch die Veränderung der Antriebsdrehzahl der Drehstrommotore 25 der Pflückeinheiten.

Die Steuerung des hydrostatischen Antriebs 29 und des elektrischen Antriebs sind dem Fachmann nach den allgemeinen Regelen der Technik bekannt und daher braucht an dieser Stelle nicht näher darauf eingegangen zu werden.

Die Ansteuerung kann von einer zentralen Steuereinheit aus der Fahrerkabine des Trägerfahrzeugs heraus erfolgen.

Die Erfindung kann gleichermaßen auch auf andere umlaufend angetriebene Arbeitswerkzeuge von Vorsatzgeräten, wie beispielsweise Maisgebisse oder Mähwerke, aber auch Wender Schwader, Ladewagen oder beispielsweise auch an Ballenpressen der Landtechnik angewandt werden.

### Bezugszeichenliste

- 1: Pflückeinheit
- 2,2': Pflückwalze
- 3: Pflückspalt
- 4: Walzenkörper
- 5: Pflückmesser
- 6: Einzugsschnecke
- 7: Flanschachse
- 8: Flansch
- 9: Wälzlager
- 10: Wälzlager
- 11: Distanzhülse
- 12: Druckscheibe
- 13: Sicherungsmutter
- 14: Splint
- 15: Einschraubgewindes
- 16: Innensechskant
- 17: Stator
- 18: Statorwicklung
- 19: Passfeder
- 20: Läufer
- 21: Leiterstabkäfig
- 22: Flanschplatte
- 23: Rahmengestell
- 24: Achsschulter
- 25: Antriebsmotor, Drehstrommotor
- 26: Vorsatzgerät
- 27: elektrische Leitungsverbindung
- 28: Antriebssystem
- 29: hydrostatischer Antrieb

- AW: Abtriebswelle
- F: Fahrtrichtung
- DG: Stromerzeuger, Drehstromgenerator
- HM: Hydraulikmotor
- HP: Hydraulikpumpe
- VB: Verbrennungsmotor
- TF: Trägerfahrzeug

## Patentansprüche

1. Vorrichtung zum Antreiben von Pflückwalzen von Vorsatzgeräten (26) zum Ernten von Fruchtständen von stängeligem Erntegut, beispielsweise Maispflanzen oder Sonnenblumen, wobei das Vorsatzgerät (26) von einem Trägerfahrzeug (TF) wie Mähdrescher oder Feldhäcksler aufgenommen wird und das Vorsatzgerät (26) mehrere in einem Rahmengestell (23) nebeneinander angeordnete Pflückeinheiten (1) aufweist, und eine Pflückeinheit (1) wenigstens eine umlaufend angetriebene Pflückwalze (2,2') aufweist, die antriebsseitig mit der Abtriebswelle (AW) des Verbrennungsmotors (VB) des Trägerfahrzeugs (TF) in Antriebsverbindung steht, **dadurch gekennzeichnet, dass** das Antriebssystem (28) zum Antrieb wenigstens einer Pflückeinheit (1), welches in Antriebsverbindung mit der Abtriebswelle (AW) des Verbrennungsmotor (VB) steht, wenigstens einen elektrischen Stromerzeuger (DG), einen elektrischen Antriebsmotor (25) und eine elektrische Leitungsverbindungen (27) zwischen Stromerzeuger (DG) und Antriebsmotor (25) umfasst, wobei der Antriebsmotor (25) Teil einer Pflückwalze (2,2') ist und der Stromerzeuger (DG) Teil des Vorsatzgeräts (26) ist.

2. Vorrichtung nach Anspruch 1, **dadurch gekennzeichnet, dass** der Antriebsmotor (25) als Drehstrommotor ausgebildet ist.

3. Vorrichtung nach Anspruch 2, **dadurch gekennzeichnet, dass** der Drehstrommotor (25) als Drehstrom-Asynchronmotor ausgebildet ist.

4. Vorrichtung nach Anspruch 2, **dadurch gekennzeichnet, dass** der Drehstrommotor (25) als Kurzschluss-Käfigläufer ausgebildet ist.

5. Vorrichtung nach Anspruch 2, **dadurch gekennzeichnet, dass** der Drehstrommotor (25) als Außenläufer ausgebildet ist.

6. Vorrichtung nach Anspruch 1, **dadurch gekennzeichnet, dass** der Stromerzeuger (DG) als Drehstromgenerator ausgebildet ist.

7. Vorrichtung nach Anspruch 1, **dadurch gekennzeichnet, dass** der Stromerzeuger (DG) eine Ausgangsspannung mit variabler Frequenz erzeugen kann.

8. Vorrichtung nach Anspruch 1, **dadurch gekennzeichnet, dass** der Stromerzeuger (DG) einen hydrostatischen Antrieb (29) mit variabler Drehzahl aufweist.

9. Vorrichtung nach Anspruch 8, **dadurch gekennzeichnet, dass** der hydrostatischen Antrieb (29) bestehend aus Hydraulikpumpe (HP) und Hydraulikmotor (HM), einen geschlossenem Kreislauf aufweist.

10. Vorrichtung nach Anspruch 1, **dadurch gekennzeichnet, dass** der Stromerzeuger (DG) eine Nennspannung von etwa 400 Volt erzeugt.

11. Vorrichtung nach Anspruch 1, **dadurch gekennzeichnet, dass** der Stromerzeuger (DG) einen Drehstrom mit einer Frequenz im Bereich von etwa 50 bis 70 Hz erzeugt.

## Claims

1. Apparatus for driving picking rollers of front-mounted implements (26) for harvesting crop stands of stalk crop material, for example corn plants or sunflowers, wherein the front-mounted implement (26) is mounted by a carrier vehicle (TF) such as a combine harvester or a forage harvester and the front-mounted implement (26) has a plurality of picking units (1) arranged in mutually juxtaposed relationship in a frame structure (23) and a picking unit (1) has at least one picking roller (2, 2') which is driven in rotation and which is drivingly connected at the drive side to the drive output shaft (AW) of the internal combustion engine (VB) of the carrier vehicle (TF), **characterised in that** the drive system (28) for driving at least one picking unit (1) which is in driving relationship with the drive output shaft (AW) of the internal combustion engine (VB) has at least one electric current generator (DG), an electric drive motor (25) and an electric line connection (27) between the current generator (DG) and the drive motor (25), wherein the drive motor (25) is part of a picking roller (2, 2') and the current generator (DG) is part of the front-mounted implement (26).

2. Apparatus according to claim 1 **characterised in that** the drive motor (25) is in the form of a three-phase motor.

3. Apparatus according to claim 2 **characterised in that** the three-phase motor (25) is in the form of an asynchronous three-phase motor.

4. Apparatus according to claim 2 **characterised in that** the three-phase motor (25) is in the form of a squirrel-cage motor.

5. Apparatus according to claim 2 **characterised in that** the three-phase motor (25) is in the form of an external rotor.

6. Apparatus according to claim 1 **characterised in that** the current generator (DG) is in the form of a three-phase generator.

7. Apparatus according to claim 1 **characterised in that** the current generator (DG) can generate an output voltage at variable frequency.

8. Apparatus according to claim 1 **characterised in that** the current generator (DG) has a hydrostatic drive (29) with a variable speed of rotation.

9. Apparatus according to claim 8 **characterised in that** the hydrostatic drive (29) comprising a hydraulic pump (HP) and a hydraulic motor (HM) has a closed circuit.

10. Apparatus according to claim 1 **characterised in that** the current generator (DG) generates a nominal voltage of about 400 volts.

11. Apparatus according to claim 1 **characterised in that** the current generator (DG) generates a three-phase current at a frequency in the range of about 50 to 70 Hz.

## Revendications

1. Dispositif d'entraînement de rouleaux cueilleurs d'outils frontaux (26) pour récolter des infrutescences de produit de récolte en tiges, par exemple de maïs ou de tournesol, l'outil frontal (26) étant reçu par un véhicule porteur (TF) telle qu'une moissonneuse-batteuse ou une ensileuse, et l'outil frontal (26) comportant plusieurs unités de cueillage (1) disposées côte à côte dans un bâti (23), et une unité de cueillage (1) comportant au moins un rouleau cueilleur entraîné en rotation (2, 2') qui, côté entraînement, est en liaison d'entraînement avec l'arbre de sortie (AW) du moteur à combustion interne (VB) du véhicule porteur (TF), **caractérisé en ce que** le système d'entraînement (28) pour entraîner au moins une unité de cueillage (1), lequel est en liaison d'entraînement avec l'arbre de sortie (AW) du moteur à combustion interne (VB), comporte au moins un générateur de courant électrique (DG), un moteur d'entraînement électrique (25) et une liaison câblée électrique (27) entre le générateur de courant (DG) et le moteur d'entraînement (25), le moteur d'entraînement (25) faisant partie d'un rouleau cueilleur (2, 2') et le générateur de courant (DG) faisant partie de l'outil frontal (26).

2. Dispositif selon la revendication 1, **caractérisé en ce que** le moteur d'entraînement (25) étant conformé en moteur triphasé.

3. Dispositif selon la revendication 2, **caractérisé en ce que** le moteur triphasé (25) est conformé en moteur asynchrone triphasé.

4. Dispositif selon la revendication 2, **caractérisé en ce que** le moteur triphasé (25) est conformé en rotor en court-circuit à cage d'écureuil.

5. Dispositif selon la revendication 2, **caractérisé en ce que** le moteur triphasé (25) est conformé en rotor extérieur.

6. Dispositif selon la revendication 1, **caractérisé en ce que** le générateur de courant (DG) est conformé en alternateur triphasé.

7. Dispositif selon la revendication 1, **caractérisé en ce que** le générateur de courant (DG) peut produire une tension de sortie à fréquence variable.

8. Dispositif selon la revendication 1, **caractérisé en ce que** le générateur de courant (DG) comporte un moyen d'entraînement hydrostatique (29) à vitesse de rotation variable.

9. Dispositif selon la revendication 8, **caractérisé en ce que** le moyen d'entraînement hydrostatique (29) constitué d'une pompe hydraulique (HP) et d'un moteur hydraulique (HM) comporte un circuit fermé.

10. Dispositif selon la revendication 1, **caractérisé en ce que** le générateur de courant (DG) produit une tension nominale d'environ 400 volts.

11. Dispositif selon la revendication 1, **caractérisé en ce que** le générateur de courant (DG) produit un courant triphasé avec une fréquence située dans la plage d'environ 50 à 70 Hz.
